# EUROPÄISCHE PATENTANMELDUNG

(11) **EP 1 118 388 A1**
(43) Veröffentlichungstag der Anmeldung: **25.07.2001**
(21) Anmeldenummer: 00128057.7
(22) Anmeldetag: 21.12.2000
(51) Int. Cl.: B05B 5/04

(54) **Elektrostatischer Rotationszerstäuber**

(30) Priorität: 15.01.2000 DE 10001570
(71) Anmelder: Lac Tec GmbH Gesellschaft für moderne Lackiertechnik, 63110 Rodgau (DE)
(72) Erfinder: Scholz, Thomas, Dr., 63110 Rodgau (DE); Klein, Udo, 63128 Dietzenbach (DE)
(74) Vertreter: Schieferdecker, Lutz, Dipl.-Ing.

(57) **Zusammenfassung**

Die Erfindung begrifft einen elektrostatischen Rotationszerstäuber für Beschichtungszwecke mit einem aerostatischen, axial und axial gerichtete Kräfte aufnehmenden, gegebenenfalls mehrteiligen Lager 3 für eine fliegend in einem Luftspalt 21 gelagerte, eine Zerstäuberglocke 5 tragende Welle 4.

Als Kern der Erfindung ist vorgesehen, daß das Lager 3 für die Welle 4 aus einem elektrisch nicht leitenden Werkstoff besteht.

## Beschreibung

Die Erfindung betrifft einen elektrostatischen Rotationszerstäuber für Beschichtungszwecke mit einem aerostatischen, axial und radial gerichtete Kräfte aufnehmenden, gegebenenfalls mehrteiligen Lager für eine fliegend in einem Luftspalt gelagerte, eine Zerstäuberglocke tragende Welle gemäß Oberbegriff von Patentanspruch 1.

Die in dem Luftspalt fliegend gelagerte Welle, an deren vorderem Ende die Zerstäuberglocke befestigt ist, lädt sich im elektrostatischen Feld auf. Obwohl der Luftspalt nur eine Breite von 3 bis 30 µm aufweist, erfolgt ein Ladungsausgleich zwischen der schwebenden Welle und der oder den Lagerschalen zum Gehäuse des Zerstäubers, das geerdet ist. Der Ladungsausgleich ist mit Funkenbildung verbunden, die von der Welle auf die Lagerschale überspringen und allmählich zu einem Abbrand der Welle und der Lagerschalen führen. Hiermit verbunden sind auch Rückstände im Lagerbereich und der sich durch die Funkenerosion ständig verbreiternde Luftspalt führt zu einem vorzeitigen Lagerverschleiß.

Der Erfindung liegt daher die Aufgabe zugrunde, Maßnahmen vorzusehen, um die Funkenerosion und den damit verbundenen Abbrand der Welle zu vermeiden.

Zur Lösung dieser Aufgabe sieht die Erfindung mit den Merkmalen des kennzeichnenden Teiles von Anspruch 1 vor, daß das Lager für die Welle aus einem elektrisch nicht leitenden Werkstoff besteht.

Ein Ladungsausgleich über die Lagerschale zwischen Zerstäuberglocke und der sie tragenden Welle einerseits und dem Zerstäubergehäuse kann nicht mehr stattfinden und auch nicht zu einer Funkenerosion führen, da die Welle und das Zerstäubergehäuse durch das elektrisch nicht leitende Lage getrennt sind. Die eigentlichen Lagerflächen des aerostatischen Lagers bleiben daher unbeeinflußt und die Lebensdauer des Lagers wird deutlich erhöht.

In Weiterbildung der Erfindung ist vorgesehen, daß lagerseitig mindestens eine elektrisch leitende Elektrode an einer definierten Stelle vorgesehen ist. Mit Hilfe dieser Elektrode kann die elektrostatische Aufladung gezielt und berührungslos abfließen. Dies gewährleistet die langfristige Funktionsfähigkeit des Zerstäubers.

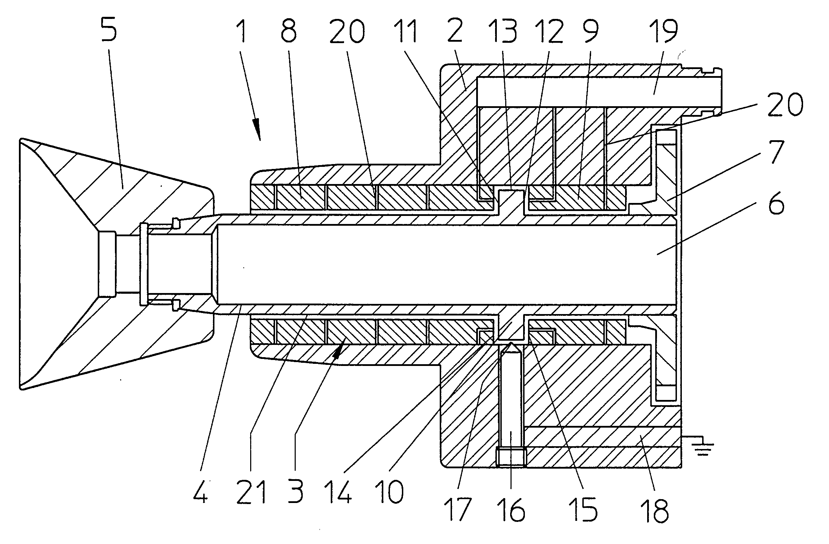

Weitere Merkmale der Erfindung gehen aus der Beschreibung und den Unteransprüchen in Verbindung mit der Zeichnung hervor.

Die Erfindung wird nachstehend anhand eines Ausführungsbeispieles, das in der Zeichnung dargestellt ist, näher beschrieben.

Ein elektrostatischer Rotationszerstäuber 1 umfaßt ein Gehäuse 2 mit einem Lager 3 für eine Welle 4, die an ihrem einen Ende eine Zerstäuberglocke 5 und an ihrem anderen Ende 6 zum Beispiel ein als Antrieb dienendes Turbinenrad 7 trägt. Das Lager 3 besteht gemäß Ausführungsbeispiel aus zwei Lagerschalen 8 und 9. Die Lagerschalen 8 und 9 sind in geringem Abstand voneinander in dem Gehäuse 2 angeordnet.

Die Welle 4 weist einen Wellenbund 10 auf. Mit Hilfe des Wellenbundes 10 sind eine glockenseitige sowie ringförmige, axiale Stützfläche 11 und eine der Zerstäuberglocke 5 abgewandte, ringförmige sowie axiale Stützfläche 12 und radial außen dazwischen eine Umfangsfläche 13 vorgesehen. Die beiden Lagerschalen 8 und 9 sind jeweils zu beiden Seiten des Wellenbundes 10 angeordnet und bilden mit diesen zugeordneten Stirnflächen jeweils haltende bzw. stützende und führende Axialflächen 14 und 15.

Lagerseitig ist mindestens eine elektrisch leitende Elektrode 16 vorgesehen. Die Elektrode 16 weist eine der Welle 4 zugewandte Spitze 17 auf. Gemäß Ausführungsbeispiel ist die Elektrode 16 in dem Gehäuse 2 austauschbar und gegebenenfalls nachstellbar angeordnet. Ein Leiter 18 ist mit der Elektrode 16 verbunden und dient zur Erdung.

Das Lager 3 bzw. die Lagerschalen 8 und 9 bestehen aus einem elektrisch nicht leitenden Werkstoff wie zum Beispiel aus Keramik und/oder aus Kunststoff.

Die Welle 6 ist in der einzigen Figur als Hohlwelle dargestellt und weist grundsätzlich weitere, hier nicht interessierende Komponenten auf. Sie besteht in der Regel aus einem elektrisch leitenden Werkstoff wie Stahl, kann grundsätzlich aber auch selbst aus einem elektrisch nicht leitenden Werkstoff gefertigt sein. Sie besteht dann also auch aus Keramik und/ oder aus Kunststoff.

Zur Bildung eines Luftpolsters in dem Luftspalt 21 zwischen Lager 3 und Welle 4 wird Druckluft in den Luftspalt 21 gepreßt. Dies erfolgt über einen Druckluftanschluß 19. Kanäle 20 in dem Gehäuse 2 und in den Lagerschalen 8 und 9 der einzigen Figur symbolisieren die Versorgung des Luftspaltes 1 mit Druckluft.

Die Elektrode 16 ist schließlich austauschbar in dem Gehäuse 2 angeordnet, so daß sie bei bedarf problemlos ersetzt werden kann.

## Patentansprüche

1. Elektrostatischer Rotationszerstäuber für Beschichtungszwecke mit einem aerostatischen, axial und radial gerichtete Kräfte aufnehmenden, gegebenenfalls mehrteiligen Lager (3) für eine fliegend in einem Luftspalt (21) gelagerte, eine Zerstäuberglocke (5) tragende Welle (4),
dadurch gekennzeichnet, daß das Lager (3) für die Welle (4) aus einem elektrisch nicht leitenden Werkstoff besteht.

2. Rotationszerstäuber nach Anspruch 1, dadurch gekennzeichnet, daß mindestens eine berührungslos wirkende, elektrisch leitende Elektrode (16) der Welle (4) zugeordnet ist.

3. Rotationszerstäuber nach mindestens einem der vorhergehenden Ansprüche, dadurch gekennzeichnet, daß die Elektrode (16) austauschbar angeordnet ist.

4. Rotationszerstäuber nach mindestens einem der vorhergehenden Ansprüche, dadurch gekennzeichnet, daß die Elektrode (16) eine der Welle (4) zugeordnete Spitze (17) aufweist.

5. Rotationszerstäuber nach mindestens einem der vorhergehenden Ansprüche, dadurch gekennzeichnet, daß das Lager (3) mindestens eine aus Keramik bestehende Lagerschale (8, 9) umfaßt.

6. Zerstäuber nach mindestens einem der vorhergehenden Ansprüche, dadurch gekennzeichnet, daß das Lager (3) mindestens eine aus Kunststoff bestehende Lagerschale (8, 9) umfaßt.

7. Zerstäuber nach mindestens einem der vorhergehenden Ansprüche, dadurch gekennzeichnet, daß die Welle (4) ringförmige sowie axial gerichtete Stützflächen (11, 12) aufweist, denen lagerseitig ringförmige Axialflächen (14, 15) zugeordnet sind.

8. Rotationszerstäuber nach mindestens einem der vorhergehenden Ansprüche, dadurch gekennzeichnet, daß die axial gerichteten Stützflächen (11, 12) der Welle (4) zusammen mit einer Umfangsfläche (13) einen Wellenbund (10) begrenzen und daß die Elektrode (16) lagerseitig der Umfangsfläche (13) des Wellenbundes (10) zugeordnet ist.

9. Rotationszerstäuber nach mindestens einem der vorhergehenden Ansprüche, dadurch gekennzeichnet, daß Lagerschalen (8, 9) beidseitig vom Wellenbund (10) angeordnet sind.

10. Rotationszerstäuber nach mindestens einem der vorhergehenden Ansprüche, dadurch gekennzeichnet, daß der Wellenbund (10) auf der Welle (4) nahe ihrem der Zerstäuberglocke (5) abgewandten Ende (6) angeordnet ist.

11. Zerstäuber nach mindestens einem der vorhergehenden Ansprüche, dadurch gekennzeichnet, daß zugleich auch die Welle (4) zumindest teilweise aus einem elektrisch nicht leitenden Werkstoff besteht.
